# EUROPÄISCHE PATENTSCHRIFT

(11) **EP 0 455 674 B1**
(45) Veröffentlichungstag und Bekanntmachung des Hinweises auf die Patenterteilung: **21.09.1994**
(21) Anmeldenummer: 90902138.8
(22) Anmeldetag: 29.01.1990
(51) Int. Cl.: B23Q 16/04

(54) **VORRICHTUNG ZUM ENTNEHMEN VON GEGENSTÄNDEN AUS EINEM FORMRAUM**
DEVICE FOR REMOVING OBJECTS FROM A MOULD CAVITY
DISPOSITIF D'ENLEVEMENT D'OBJETS CONTENUS DANS LA CAVITE D'UN MOULE

(30) Priorität: 27.01.1989 DE 3902447; 27.10.1989 DE 3935838
(43) Veröffentlichungstag der Anmeldung: 13.11.1991
(73) Patentinhaber: GAIGL, Karl-Josef, D-78224 Singen (DE); GRIMM, Berndt, D-78462 Konstanz (DE); JAITER, Werner, D-78256 Steisslingen (DE); ENGESSER, Karl, D-78247 Hilzingen (DE)
(72) Erfinder: GRIMM, Berndt, D-78462 Konstanz (DE)
(74) Vertreter: Hiebsch, Gerhard F., Dipl.-Ing.
(86) Internationale Anmeldenummer: DE9000054
(87) Internationale Veröffentlichungsnummer: WO9008625

(56) Entgegenhaltungen:
- EP-A- 0 256 523
- WO-A-88/03238
- CH-A- 124 572
- FR-A- 1 346 584
- FR-A- 2 559 086
- US-A- 2 386 014

## Beschreibung

Die Erfindung betrifft eine Vorrichtung zum Entnehmen von Gegenständen aus beispielsweise einem Formraum zwischen zwei Formhälften einer Maschine, insbesondere Spritzgießmaschine, Presse od. dgl., wobei mit einer Formhälfte ein Antriebselement verbunden ist, welches ein Antriebsrad an der anderen Formhälfte antreibt und hierdurch eine Schwinge oder Kurbel in Drehbewegung versetzt, über die ein Arm oder Schlitten mit der Entnahmeeinrichtung aus dem Formraum führbar ist, indem die Schwinge oder Kurbel in einen Kanal zwischen zwei Führungsstreifen eingleitet und in jeder vorbestimmten Endlage des Armes oder Schlittens aus diesem Kanal herausfährt und der Arm oder Schlitten in diesen Endlagen gehalten ist.

Derartige Vorrichtungen sind beispielsweise aus der internationalen Patentanmeldung WO 88/03238 bekannt. In den dort gezeigten Ausführungsformen wird auf mechanischem Wege ein Handlinggerät in den Formraum einer Spritzgießmaschine während dem Öffnen der bewegbaren Formhälfte eingebracht und zwangsläufig beim Schließen der Spritzgießmaschine wieder aus dem Formraum zusammen mit dem zu entnehmenden Artikel herausgeführt. Ferner wird zwar ein Schlitten, an welchem die Entnahmevorrichtung festliegt, in den jeweiligen Endlagen gehalten, wobei jedoch immer eine oder mehrere Druckrollen mit einem festen Anschlag zusammenwirken. Obwohl sich die Vorrichtung in der Praxis bewährt hat, ist sie relativ aufwendig aufgebaut und benötigt eine Vielzahl von Einzelelementen, welche einem Verschleiß unterliegen können, zumal diese Vorrichtungen zum Teil im Dreischichtbetrieb verwendet werden und mehrere Male in der Minute in den Formraum einer Spritzgießmaschine einfahren.

Der Erfinder hat sich zum Ziel gesetzt, das Festlegen des Armes bzw. Schlittens in den Endlagen zu verbessern und die Handhabung der Vorrichtung sicherer zu gestalten.

Zur Lösung dieser Aufgabe führt, daß an der einen Formhälfte, an welcher der Arm oder Schlitten und die Schwinge oder Kurbel befestigt sind, auch eine Verriegelungseinheit festliegt, welche die Festlegung des Arms oder Schlittens durch formschlüssigen Eingriff zwischen der Verriegelungseinheit und dem Arm oder Schlitten bewirkt, wobei die Verriegelungseinheit über ein Getriebe mit einem Antriebselement gekoppelt ist, welches mit der anderen Formhälfte verbunden ist, und wobei das Getriebe so abgestimmt ist, daß die Verriegelung erst dann erfolgt, wenn die Schwinge oder Kurbel außer Eingriff mit dem Kanal gerät.

Bevorzugt geschieht dies über einen einzigen Schieber, der in den genau definierten Endlagen mit entsprechenden Rastnasen in Nuten eingreift bzw. Riegel hintergreift. Dabei ist diesem Schieber eine Antriebseinheit zugeordnet, welche bevorzugt aus einer Zahnstange und entsprechend aufeinander abgestimmten Getriebeteilen besteht. Hierdurch wird auf einfachem mechanischen Wege eine exakte Festlegung und Halterung des Armes in seinen Endlagen bewirkt.

Ferner ist über eine einzige Stange mit entsprechenden Exzentern die Verbindung zwischen der Entnahmevorrichtung und einer Formhälfte aufhebbar, so daß beispielsweise die Spritzgießmaschine auch ohne Entnahmevorrichtung ungestört betrieben werden kann. In jedem Fall bleibt aber gewährleistet, daß bei einem Zufahren der Maschine der Arm bzw. die damit verbundene Entnahmeeinheit aus dem Formraum gefahren wird.

Bei einem weiteren Ausführungsbeispiel der Erfindung ist die Anzahl der Elemente erheblich vermindert, da nunmehr der Schieber durch einfache Scheiben ersetzt wurde, welche mit einem ebenfalls bewegbaren Gabelbolzen zusammenwirken. Es gibt keinen Anschlag mehr in den Endlagen, sondern in den Endlagen, in denen die Geschwindigkeit des Schlittens kurzfristig auf Null zugeht, wird der Schlitten im Anschluß an das Herausgleiten der Führungsrolle aus der Führungsrinne durch die Scheiben gehalten.

Erfindungsgemäß besitzen die Scheiben jeweils einen Sektorenausschnitt, durch welchen zwei Steuerkanten in dem vollen Scheibenteil gebildet werden, die in die Gabelung des Gabelbolzens in der jeweiligen Endlage einfahren können.

Vor allem die Justage der Endlagenfestlegung ist wesentlich erleichtert, da die Scheiben bevorzugt an einer Welle angeordnet sind und dort verschoben werden können. Gleichfalls können die Scheiben in der gewünschten Endlage so um die Welle gedreht und dann festgelegt werden, daß der gewünschte Eingriffsmoment genau festgestellt ist.

Die Welle selbst übernimmt die Bewegung der Scheiben, wobei die Welle um ihre Längsachse dreht. Bevorzugt wird diese Drehung durch eine Antriebseinrichtung bewirkt, welche auf die Bewegung des Kurbelarmes abgestimmt ist. In dem Augenblick, in dem der Kurbelarm bzw. die Führungsrolle an dem Kurbelarm die Führungsrinne verläßt, muß die jeweilige Steuerkante den vollen Scheibenteil in die Gabelung des Gabelbolzens einführen. Selbstverständlich sind hier eine Vielzahl elektronischer oder mechanischer Antriebsmöglichkeiten der Welle denkbar.

In dem bevorzugten Ausführungsbeispiel ist jedoch parallel zu der Zahnstange, welche den Kurbelarm in Bewegung versetzt, eine weitere Zahnstange angeordnet, die eine Verbindung über eine Getriebeeinheit mit der Welle aufweist. Die entsprechenden Zahnräder in der Getriebeeinheit sind so aufeinander bzw. auf die Bewegung des Kurbelarmes abgestimmt, daß das Einfahren der Steuerkanten in die Gabelung mit dem Herausgleiten der Führungsrolle aus der Führungsrinne übereinstimmt.

In vielen Ausführungsbeispielen muß es auch möglich sein, den Schlitten mit dem entsprechenden Handlinggerät von der Öffnungs- und Schließbewegung der Spritzgießmaschine abzukoppeln, um diese Maschine auch ohne entsprechende Entnahmevorrichtung fahren zu können. Es ist in dem hier gezeigten Ausführungsbeispiel möglich, daß die Scheibenlage nicht mehr mit der Position des Schlittens übereinstimmt und entsprechend der Gabelbolzen beispielsweise auf einen vollen Scheibenteil aufschlägt.

Dies wird dadurch vermieden, daß der Gabelbolzen in das Schlittengehäuse zurückgezogen wird, so daß er ohne weiteres auch an dem vollen Scheibenteil vorbeifahren kann. Dieses Zurückziehen geschieht der Einfachheit halber über einen Kipphebel, der ebenfalls an der gleichen Welle angeordnet ist, welche die Rasteinrichtung bzw. Einrichtung zum Anheben einer Leiste betätigt. Hierdurch wird bewirkt, daß durch eine einzige Drehbewegung der Welle die Leiste angehoben und damit die Führungsrinne für die Führungsrolle aufgehoben, die Rasteinrichtung in Klinkposition und der Gabelbolzen aus der Eingriffsposition mit den Scheiben gebracht wird. Der Einfachheit halber besteht diese Einrichtung aus einem Kipphebel, welcher einen gehäusefesten Drehpunkt besitzt und einerseits an dem Gabelbolzen angelenkt sowie exzentrisch mit einer Scheibe an der Welle verbunden ist.

Durch die Verringerung der einzelnen Elemente ist nunmehr der Verschleiß erheblich minimiert worden und die gesamte Entnahmevorrichtung leichter ausgestaltet. Aus diesem Grunde kann diese Entnahmevorrichtung nunmehr auch Anwendung für beispielsweise Spritzgießmaschinen finden, welche mit einem kürzeren Zyklus laufen bzw. eine höhere Geschwindigkeit der Öffnungs- bzw. Schließbewegung aufweisen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1: eine Seitenansicht einer erfindungsgemäßen Vorrichtung zum Entnehmen von Gegenständen aus einer Spritzgießeinrichtung;
- Fig. 2: eine Draufsicht auf die Vorrichtung gemäß Figur 1;
- Fig. 3: eine vergrößerte Draufsicht auf eine Verriegelungseinrichtung;
- Fig. 4: eine vergrößerte Darstellung der Verriegelungseinrichtung gemäß Figur 3 mit weiteren Riegelelementen;
- Fig. 5: eine Seitenansicht eines weiteren Ausführungsbeispiels einer erfindungsgemäßen Vorrichtung zum Entnehmen von Gegenständen aus einer Spritzgießeinrichtung;
- Fig. 6: eine Draufsicht auf die Vorrichtung gemäß Figur 5;
- Fig. 7: einen Querschnitt durch die Vorrichtung gemäß Figur 6 entlang Linie VII-VII;
- Fig. 8: einen teilweise dargestellten Querschnitt durch Figur 7 entlang Linie VIII-VIII im Bereich einer Getriebeeinheit;

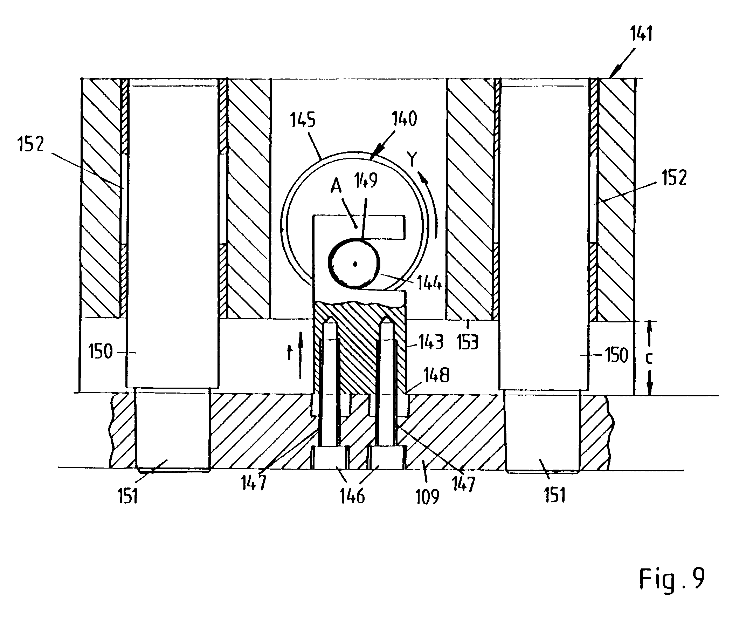

- Fig. 9: einen Querschnitt durch den vorderen Bereich eines Schlittenarmes mit einer Einrichtung zum Anheben einer Leiste;
- Fig. 10: einen Querschnitt durch einen Schlittenarm und ein teilweise dargestelltes Schlittengehäuse im Bereich einer Rasteinrichtung;

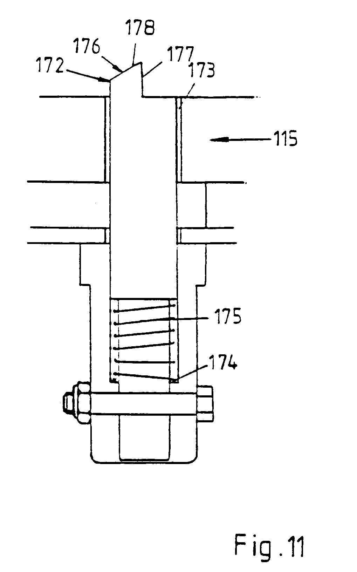

- Fig. 11: eine vergrößert dargestellte Seitenansicht eines Gegenelementes, welches mit der Rasteinrichtung gemäß Figur 10 zusammenwirkt.

Eine erfindungsgemäße Vorrichtung zum Entnehmen von Gegenständen aus einer nur teilweise dargestellten Spritzgießmaschine ist auf der beweglichen Formhälfte 1 dieser Spritzgießmaschine angeordnet. Sie sitzt mit einem Gehäuse 2 dieser Formhälfte 1 auf, während seitlich eine Führung 3 von der Formhälfte 1 abragt.

Auf der Führung 3 gleitet ein Schlitten 4 in Richtung x und bringt damit einen Arm 5 in den Formraum 6 zwischen der beweglichen Formhälfte 1 und einer feststehenden Formhälfte 7 (siehe Fiur 2). Beide Formhälften 1 und 7 sind über Führungssäulen 8 miteinander verbunden.

An dem Arm ist im übrigen ein der Übersichtlichkeit halber nicht gezeigter Entnahmearm für die Gegenstände angeordnet, welcher beispielsweise mit entsprechenden Saugern besetzt sein kann.

Die Bewegung des Armes 5 und des Schlittens 4 erfolgt über eine Schwinge 9, welche mit einem Zahnrad 10 in dem Gehäuse 2 verbunden ist. Dieses Zahnrad 10 kämmt eine Zahnstange 11, welche an der feststehenden Formhälfte 7 festliegt. Natürlich ist auch die entgegengesetzte Anordnung denkbar.

Die Schwinge 9 ist an ihrem freien Ende mit einer Mitnehmerrolle 15 besetzt, welche in einen Kanal 12 zwischen zwei Führungsstreifen 13 und 14 eingreifen kann. Durch die Bewegung der Schwinge 9 beschreibt die Mitnehmerrolle 15 einen Kreis 16, wobei sie eine halbe Umdrehung lang den Arm 5 mitnimmt. In beiden Endlagen läuft der Schlitten 4 auf Anschlägen 17 und 18, wobei im gleichen Augenblick jeweils die Mitnehmerrolle 15 aus dem Kanal 12 austritt.

Eine ähnliche Anordnung ist im übrigen näher in der internationalen Anmeldung WO 88/03238 beschrieben, auf die hier ausdrücklich Bezug genommen werden soll.

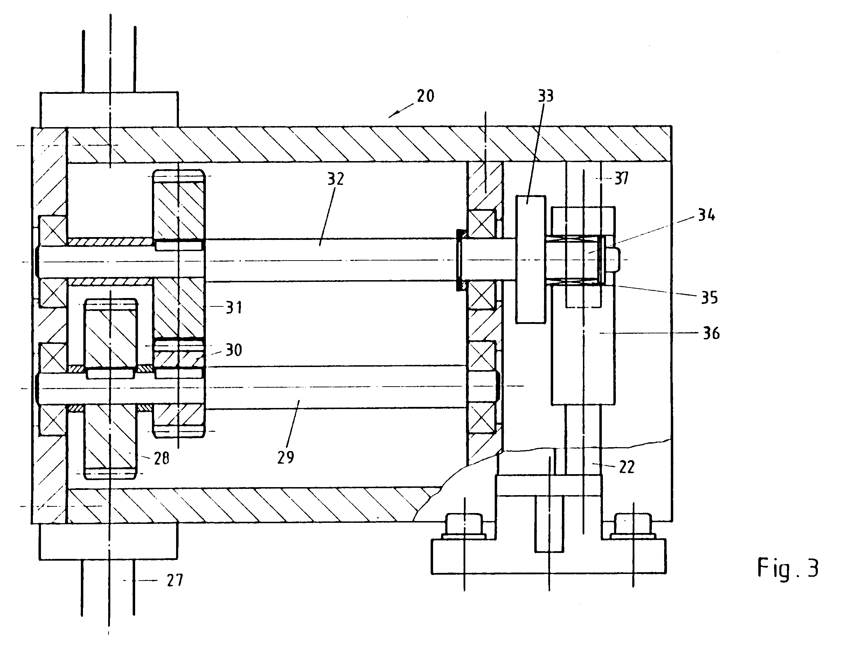

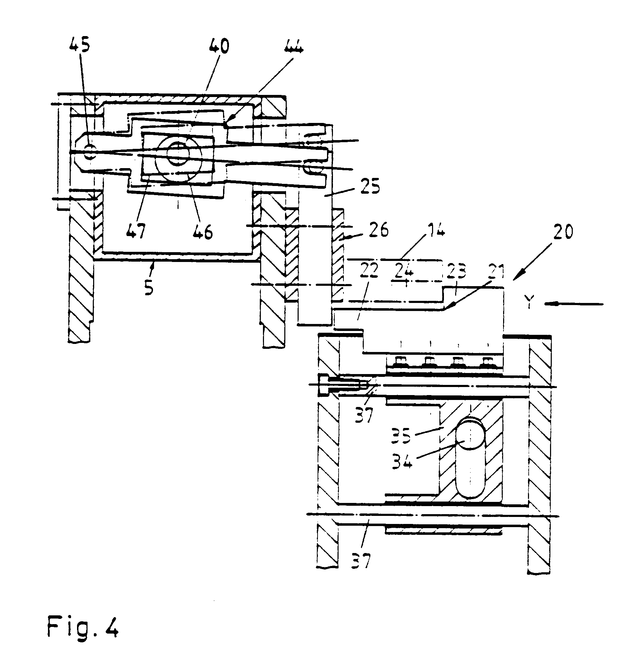

Die Festlegung des Schlittens 4 und damit auch des Armes 5 in den jeweiligen Endlagen erfolgt durch eine mit den Anschlägen 17 und 18 zusammenwirkende Verriegelungseinheit 20. Diese ist in den Figuren 3 und 4 näher dargestellt. Sie besteht vor allem aus einem Schieber 21, welcher etwa senkrecht zur Bewegungsrichtung x des Schlittens 4 verschoben werden kann. Dabei besitzt dieser Schieber 21 zwwei Rastnasen 22 und 23, welche in der Schubrichtung y versetzt zueinander angeordnet sind.

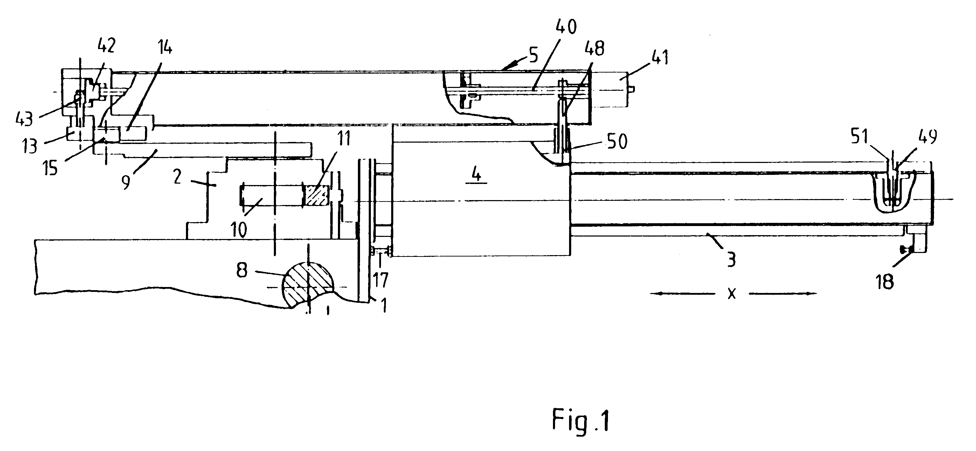

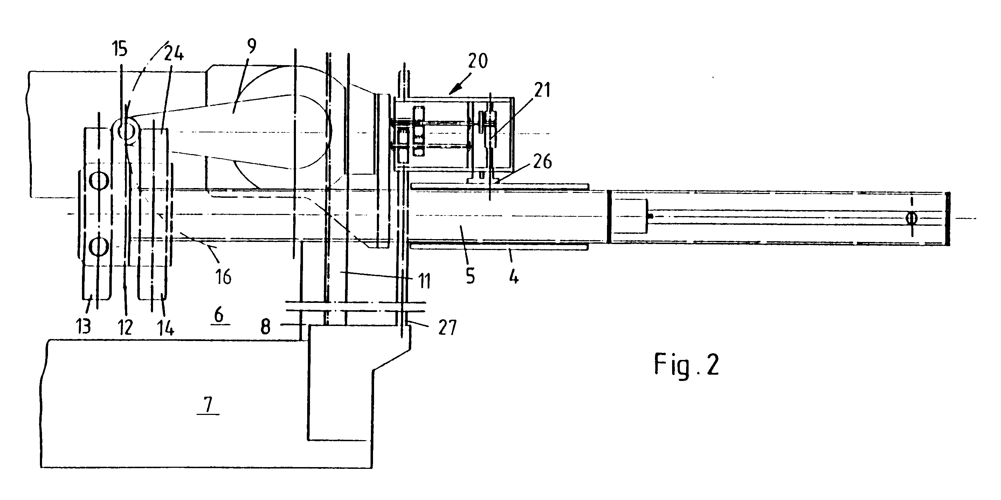

In der in den Figuren 1 und 2 nicht gezeigten ausgefahrenen Endlage des Schlittens 4 wird beim Auftreffen des Schlittens 4 auf den Anschlag 18 der Schieber 21 in Richtung y bewegt, wobei die Rastnase 23 in eine Nut 24 in dem Führungsstreifen 14 eingleitet. Hierdurch wird der Schlitten 4 exakt zwischen dem Anschlag 18 und der Rastnase 23 in dieser Endlage gehalten, wobei die Schwinge 9 den Kanal 12 verläßt und ein freies Überfahren dieser Endlage durch die Formhälften 1 und 7 zuläßt.

Sobald der Arm 5 bzw. die Entnahmeeinheit in den Formraum 6 bewegt werden soll, d. h. die Formhälfte 1 öffnet, wird die Schwinge 9 in entgegengesetzte Drehrichtung bewegt und die Mitnehmerrolle 15 greift in den kanal 12 ein. In diesem Augenblick fährt die Rastnase 23 aus der Nut 24 und gibt den Arm 5 frei.

Sobald die eingefahrene Endlage des Armes 5 erreicht ist, trifft dieser auf den Anschlag 17. In diesem Augenblick wird wiederum der Schieber 21 in Richtung y bewegt und hintergreift einen Riegel 25, der einen Führungskanal 26 durchsetzend seitlich am Arm 5 bzw. Schlitten 4 angeordnet ist. Hierdurch wird der Schlitten 4 zwischen dem Anschlag 17 und der Rastnase 22 in einer gesicherten Endlage gehalten, so daß die Mitnehmerrolle 15 den Kanal 12 verlassen kann und eine Entnahmeeinheit exakt in Entnahmeposition gebracht werden kann, auch wenn die Formhälfte 1 ihre Endlage überfährt.

Die Bewegung des Schiebers 21 in Richtung y erfolgt über ein Getriebe, welches mit einer weiteren Zahnstange 27 in Verbindung steht. Diese Zahnstange 27 ist ebenfalls an der Formhälfte 7 festgelegt und verläuft parallel zur Zahnstange 11.

Bei der Bewegung der Formhälfte 1 wird über die Zahnstange 27 ein Zahnrad 28 angetrieben, welches auf einer Welle 29 festliegt. Dieser Welle 29 ist ein weiteres Zahnrad 30 - im vorliegenden Ausführungsbeispiel mit geringerem Durchmesser - aufgeschoben, dessen Umfangszahnung ein weiteres Zahnrad 31 kämmt. Dieses Zahnrad 31 treibt über eine weitere Welle 32 ein Exzenterrad 33 an, das mir einem exzentrisch angeordneten Mitnehmerbolzen 34 in ein Langloch 35 eines Schieberschlittens 36 eingreift. Dieser Schieberschlitten 36 ist an Führungsstangen 37 geführt und trägt den Schieber 21.

Wesentlich bei der vorliegenden Erfindung ist das Verhältnis der einzelnen Zahnräder 28, 30 und 31 zueinander. Es muß so exakt gewählt sein, daß die Rastnase 22 und 23 erst in den Augenblicken in die Nut 24 eintreten bzw. den Riegel 25 hintergreifen, wenn der Schlitten 4 auf den Anschlag 17 bzw. 18 auftrifft und die Mitnehmerrolle 15 den Kanal 12 verläßt.

Sollte, aus welchen Gründen auch immer, keine Bewegung des Schlittens 4 und des Armes 5 in Richtung x gewünscht sein, so ist erfindungsgemäß ein Abkoppeln des Armes 5 von der Bewegung der Formhälfte 1 möglich. Hierzu wird eine in Figur 1 angedeutete Stange 40 über einen Antrieb 31 in Drehung versetzt. An drei Stellen ist diese Stange 40 mit Exzentern besetzt.

Vorne an der Spitze der Stange befindet sich der Exzenter 42. Dieser ist über einen exzentrisch angeordneten Streifen 43 mit dem Führungsstreifen 13 verbunden.

Weiterhin durchsetzt die Stange 40 gemäß Figur 4 einen Hebelarm 44, der einen Drehpunkt 45 mit dem Arm 5 besitzt. Dabei ist der Stange 40 exzentrisch eine Scheibe 46 aufgeschoben, welche in einer rechteckigen Ausnehmung 47 des Hebelarmes 44 dreht. Andernends des Drehpunktes 45 ist der Hebelarm 44 gelenkig mit dem Riegel 25 verbunden. Bei einer Drehung der Stange 40 bzw. der Scheibe 46 erfolgt ein Anheben des Hebelarmes in die strichpunktiert dargestellte Lage, wodurch der Riegel 25 angehoben wird und außer Eingriff mit der Rastnase 22 gelangt.

Schließlich befindet sich nahe dem Antrieb 41 ein exzentrisch angeordneter Riegelbolzen 48, wwelcher durch eine Drehung der Stange 40 abgesenkt werden kann. Hierdurch gerät er in den Bereich einer Klinke 49, welche er zwar durch entsprechende Aufgleitflächen 50 und 51 überfahren kann, in die er jedoch nach dem Überfahren einschnappt. Da die Klinke 49 an der Führung 3 festliegt, ist eine Halterung des Armes 5 gewährleistet. In dieser Lage befindet sich im übrigen auch die Schwinge 9 bzw. Mitnehmerrolle 15 außer Eingriff mit dem Kanal 12, da der Führungsstreifen 13 angehoben ist. Die Schwinge kann ungestört drehen, so daß die Spritzgießmaschine auch ohne Entnahmevorrichtung betrieben werden kann.

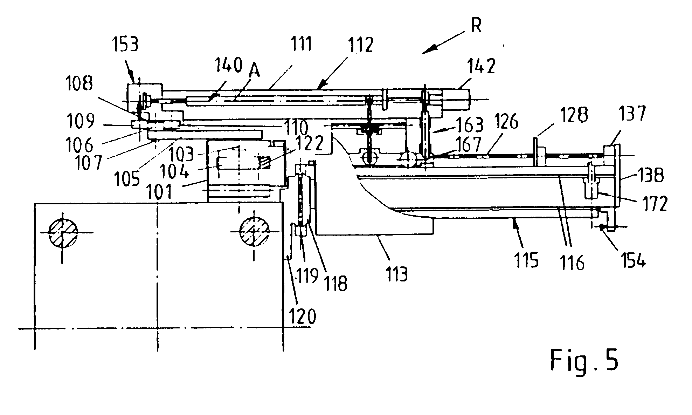

Ein weiteres Ausführungsbeispiel einer erfindungsgemäßen Vorrichtung R zum Umsetzen einer Drehbewegung in eine Linearbewegung weist gemäß Figur 5 ein Gehäuse 101 auf, welches im gezeigten Ausführungsbeispiel auf einer beweglichen Formhälfte 102 beispielsweise einer Kunststoffspritzmaschine angebracht ist. Über einen Drehbolzen 103 ist in diesem Gehäuse 101 ein Zahnrad 104 mit einem Kurbelarm 105 verbunden. Am äußeren Ende dieses Kurbelarmes 105 ist eine Führungsrolle 106 durch einen Gewindebolzen festgelegt und mit zwei Kontermuttern 107 gesichert.

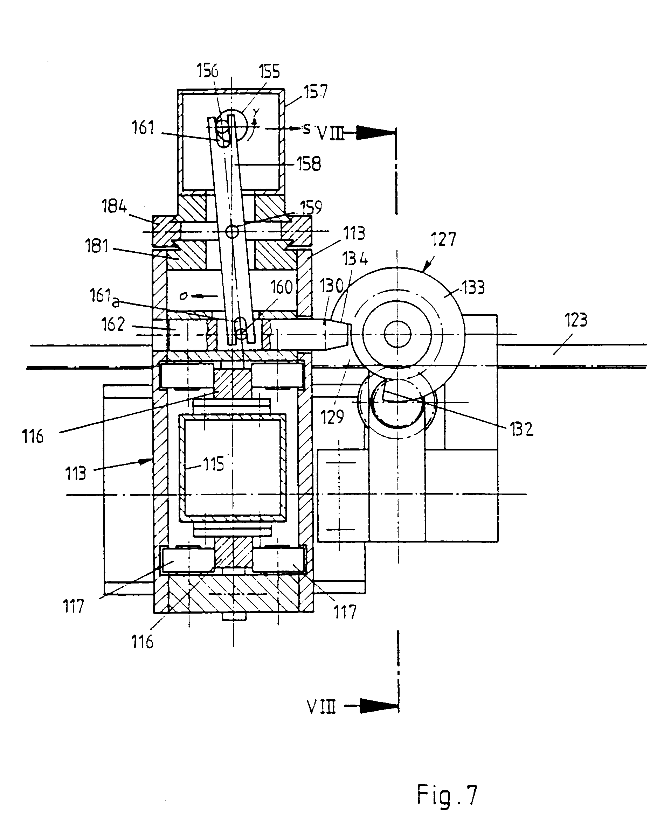

Die Führungsrolle 106 greift in eine Führungsrinne 108 ein, die von zwei Leisten 109 und 110 gebildet wird. Die Leisten 109 und 110 sind an der Unterseite eines Schlittenarmes 111 angebracht. Der Schlittenarm 111 liegt einem Schlittengehäuse 113 auf und bildet mit diesem einen in Richtung x bewegbaren Schlitten 112. Das Schlittengehäuse 113 wird von einem Führungsarm 115 durchdrungen, wobei dieser Führungsarm 115 Führungsschienen 116 aufweist, an denen, wie in Figur 7 dargestellt, rührungsrollen 117 abrollen können.

Der Führungsarm 115 besitzt ein Flanschstück 118, welches mittels Klemmbacken 119 den Führungsarm 115 über ein weiteren Flanschstück 120 mit der Formhälfte 102 lösbar verbindet.

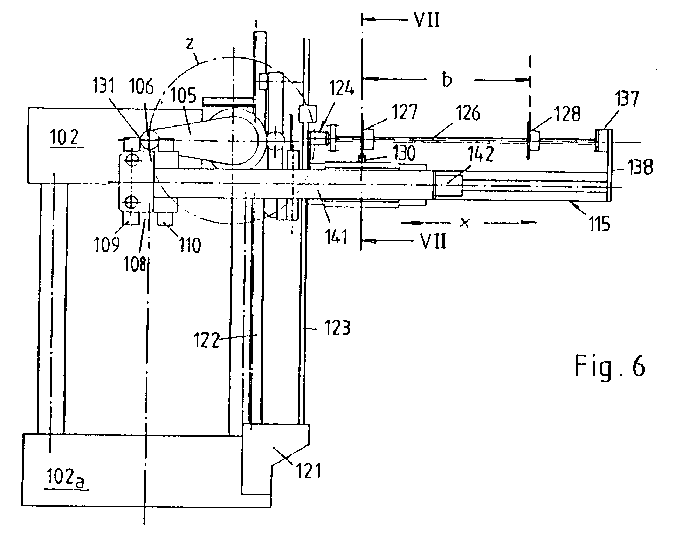

Auf der anderen, im vorliegenden Ausführungsbeispiel nicht beweglichen Formhälfte ist gemäß Fig. 6 ein Montageblock 121 festgelegt, welcher zwei Zahnstangen 122 und 123 hält, die senkrecht zur Bewegungsrichtung x verlaufen.

Die eine Zahnstange 122 führt durch das Gehäuse 101 und kämmt dort das Zahnrad 104, wodurch der Kurbelarm 105 in Drehbewegung z um den Bolzen 103 versetzt wird.

Die Führungsrolle 106 läuft in der Führungsrinne 108 und bewegt bei ihrer Kreisbewegung z um den Drehbolzen 103 den Schlitten 112 entlang des Führungsarmes 115 in Richtung x. Die Drehung des Kurbelarmes 105, zwangsgesteuert durch die Zahnstange 122, erfolgt so, daß beim Öffnen der Formhälfte der Schlitten 112 nach links bewegt wird und damit ein nicht näher gezeigtes, bevorzugt am Schlittengehäuse 113 festgelegtes Handling zwischen die Formhälften einfährt. Dieses Handling erfaßt beim Stillstand der beweglichen Formhälfte 102 die erzeugten Gegenstände. Beim Schließen der Formhälften wird der Kurbelarm 105 in eine entgegengesetzte Drehrichtung versetzt, wobei er den Schlitten 112 nach rechts entlang dem Führungsarm 115 mitnimmt und so das Handling aus dem Raum zwischen den beiden Formhälften herausbewegt, bevor die Spritzgießmaschine geschlossen ist. Während des anschließenden Spritzvorganges können die entnommenen Gegenstände geordnet abgelegt werden.

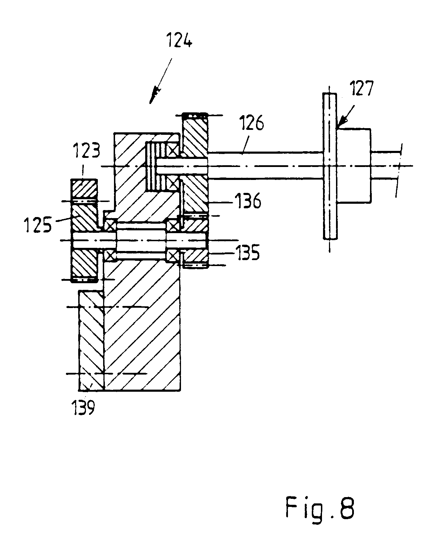

Die Zahnstange 123 kämmt gemäß Fig. 8 ein Stirnrad 125 einer Getriebeeinheit 124, wodurch eine Welle 126 in Drehbewegung versetzt wird. Dieser Welle 126 sind zwei voneinander beabstandete Scheiben 127 und 128 aufgeschoben und lösbar an der Welle 126 befestigt. Jede Scheibe 127 bzw. 128 besitzt einen in Figur 7 dargestellten Sektorenausschnitt 129, wobei die Scheibe 127 bzw. 128 insbesondere mit dem Sektorenausschnitt 129 mit einem aus dem Schlittengehäuse 113 ragenden Gabelbolzen 130 zusammenwirkt.

In Öffnungslage der beiden Formhälften der Spritzgießmaschine ist die Führungsrolle 106 am Kurbelarm 105 an der Steuerkante 131 der Führungsrinne 108 angelangt und kann diese bei einer etwaigen Weiterdrehung verlassen. In dieser Position greift die Scheibe 127 aufgrund der zwangsgesteuerten Drehung der Welle 126 über die Getriebeeinheit 124 mit einer Steuerkante 132 ihres vollen Scheibenteils 133 in die Gabelung des Gabelbolzens 130 am Schlittengehäuse 113 ein. Der Schlitten 112 bzw. das Schlittengehäuse 113 mit dem nicht näher gezeigten Handling ist somit in einer Endlage gehalten.

Werden die beiden Formhälften weiter als notwendig oder beabsichtigt geöffnet, wird auch die Drehbewegung des Kurbelarmes 105 über den eigentlichen Endpunkt zwangsläufig weitergeführt.

Im selben Maße, wie die Drehbewegung des Kurbelarmes 105 weitergeführt wird, wird auch über die Getriebeeinheit 124 die Welle 126 weitergedreht. Das bewirkt, daß die Scheibe 127 mit ihren vollen Teil durch die Gabelung des Gabelbolzens 130 fährt. Da die Führungsrolle 106 die Führungsrinne 108 verlassen hat, wird der Schlitten 112 bzw. das Schlittengehäuse 113 in seiner vorherbestimmten Endlage festgelegt und gesichert und kann in keine Richtung mehr verschoben werden.

Beim Schließen der beiden führt der Kurbelarm 105 über den Drehbolzen 103 eine entgegengesetzte Drehbewegung aus. Die Führungsrolle 106 am Kurbelarm 105 greift wieder in die Führungsrinne 108 ein. In dem Augenblick hat durch ebenfalls eine entgegengesetzte Drehbewegung der Welle 126 der volle Scheibenteil 133 der Scheibe 127 die Gabelung des Gabelbolzens 130 über die Steuerkante 132 verlassen, so daß der Gabelbolzen 130 seinerseits in den Sektorenausschnitt 129 der Scheibe 127 eingreift.

Der Schlitten 112 bzw. das Schlittengehäuse 113 ist entriegelt und kann durch die Drehbewegung z des Kurbelarmes 105 mittels der Führungsrolle 106 in der Führungsrinne 108 in Richtung x mitgenommen werden.

Der Verschieberichtung x ist in Gebrauchslage eine bestimmte Verschiebestrecke b zugeordnet. Die Verschiebestrecke b ist festgelegt durch die Länge des Kurbelarmes 105, wodurch auch der Abstand der beiden Scheiben 127 und 128 bestimmt wird.

Hat der Kurbelarm 105 durch eine Drehbewegung z den Schlitten 112 um eine Strecke b in Richtung x verschoben, ist die Führungsrolle 106 wiederum an der Steuerkante 131 der Leisten 109 und 110 angelangt. Gleichzeitig kommt der Gabelbolzen 130 exakt vor der Scheibe 128 zu stehen. Die Scheibe 128 wird im Verlauf der Schlittenbewegung x über die Welle 126 so gedreht, daß sie mit der Steuerkante, welche einer Steuerkante 134 der Scheibe 133 in Figur 7 entspricht, in die Gabelung des Gabelbolzens 130 einfährt. Der Gabelbolzen 130 hat zuvor zum Erreichen dieser Lage einen Teil des dem Sektorenausschnittes 129 der Scheibe 127 entsprechenden Sektorenausschnitt der Scheibe 128 in Richtung x durchlaufen.

Werden die beiden Formhälften 102 und 102a enger als beabsichtigt geschlossen, verläßt die Führungsrolle 106 die Führungsrinne 108, ohne daß sie den Schlitten 112 bzw. das Schlittengehäuse 113 weiter in Richtung x mitnimmt. Durch das Weiterbewegen der Zahnstange 123 wird über die Getriebeeinheit 124 auch die Welle 126 und mit ihr die Scheiben 127 und 128 gedreht. Diese Drehung bewirkt, daß die Scheibe 128 mit ihrem vollen Scheibenteil durch die Gabelung des Gabelbolzens 130 fährt und den Schlitten 112 bzw. das Schlittengehäuse 113 gegen eine weitere Verschiebung sperrt.

Der Schlitten 112 bzw. das Schlittengehäuse 113 ist in einer anderen Endlage festgelegt und gesichert. Die genaue Abstimmung der Endlagensicherungen erfolgt durch die entsprechende Anordnung der Scheiben 127 und 128 auf der Welle 126 einerseits und durch die Wahl einer entsprechenden Getriebeübersetzung in der Getriebeeinheit 124. Die Übersetzung des Getriebes der Getriebeeinheit 124 (siehe Figur 8) und somit die Drehgeschwindigkeit der Welle 126 kann durch entsprechendes Vertauschen oder Auswechseln vorzugsweise von Getriebezahnrädern 135 und 136 verändert werden.

Die Welle 126 mit den Scheiben 127 und 128 weist entgegengesetzt der Getriebeeinheit 124 eine Gegenlagereinheit 137 auf. Das Gehäuse der Getriebeeinheit 124 und der Gegenlagereinheit 137 dienen gleichzeitig zur Aufnahme von Befestigungselementen, wie z.B. von Schrauben, Schraubenbolzen od. dgl., mit denen über an den beiden Stirnflächen des Führungsarmes 115 angebrachte Platten 138,139, Winkel od. dgl. eine feste Verbindung mit dem Führungsarm 115 hergestellt wird.

Zum Abkoppeln des Schlittenantriebes von der Bewegung des Kurbelarmes 105 ist erfindungsgemäß im Schlitten 112 eine Welle 140 eingebracht, die jeweils beidseitig in einem Gehäuse 141 des Schlittenarmes 111 in nicht näher gezeigten Lagern, Büchsen od. dgl. drehbar gelagert ist. Zum Antrieb der Welle 140 ist einends des Schlittenarmes 111 ein vorzugsweise pneumatischer Drehantrieb 142 vorgesehen, der die Welle 140 gesteuert in eine Drehbewegung versetzen kann.

An der Unterseite des Gehäuses 141 des Schlittenarmes 111 sind die die Führungsrinne 108 bildenden Leisten 109 und 110 angebracht. Während die Leiste 110 fest an der Unterseite des Schlittenarmes 111 angebracht ist, weist die Leiste 109 eine gelenkige Verbindung über ein Flacheisen 143 mit einem Bolzen 144 auf einer Scheibe 145 an der Welle 140 auf. Dabei ist der Bolzen 144 exzentrisch auf der Scheibe 145 angeordnet. Das Flacheisen 143 ist einerseits durch zwei Schrauben 146, Schraubenbolzen od. dgl. an der Leiste 109 befestigt, wobei die Schrauben 146, Schraubenbolzen od. dgl. durch Bohrungen 147 in der Leiste 109 in die Fußseite 148 des Flacheisen 143 einragen und den festen Sitz gewährleisten. Andererseits weist das Flacheisen 143 eine muldenförmige Aussparung 149 auf, in die der Bolzen 144 eingreift.

Zwei Führungssäulen 150, die rechts und links entsprechend beabstandet von dem Flacheisen 143 fest in der Leiste 109 durch Gewindezapfen 151 od. dgl. eingebracht sind, durchragen Bohrungen 152 im Gehäuse 141 des Schlittenarmes 111. Diese Führungssäulen 150 sorgen zusammen mit der Flacheisenverbindung für einen festen und absolut stabilen Halt der Leiste 109.

Zwischen der Leiste 109 und der Unterseite 153 des Gehäuses 141 des Schlittenarmes 111 ist ein freier Abstand c ausgebildet. Wird die Welle 140 insbesondere mit der Scheibe 145 in Richtung y gedreht, wird die Leiste 109 über das Flacheisen 143 durch die Bewegung des exzentrisch angebrachten Bolzens 144 in Richtung t mitbewegt. Die Führungssäulen 150 durchlaufen dabei ihre Bohrungen 152. Eine Drehung in Richtung y um die Drehachse A ist in einem Maße möglich, das dem Abstand c zwischen der Leiste 109 und der Unterseite des Gehäuses des Schlittenarmes 111 entspricht. Ist dieser Abstand c in Richtung t überwunden, wird die Führungsrolle 106 freigegeben.

Wird der Kurbelarm 105 jetzt in Drehbewegung versetzt, so kann mittels der Führungsrolle 106, die entlang der Leiste 110 abläuft, der Schlitten 112 weg von den Formhälften 102 bzw. 102a bewegt werden. Ein nicht näher gezeigtes, am Schlittengehäuse 113 angebrachtes Handling ist in jedem Fall aus dem Raum zwischen den beiden Formhälften 102 und 102a herausgefahren. Wird der Kurbelarm 105 wieder in entgegengesetzte Drehrichtung versetzt, so fährt jetzt die Führungsrolle 106 unter der Leiste 109 hindurch und kann den Schlitten 112 und somit das Schlittengehäuse 113 nicht mehr in die entgegengesetzte Richtung x verschieben. Der Schlitten 112 bzw. das Schlittengehäuse 113 verbleibt weiter in der ausgefahrenen Lage und das nicht näher gezeigte Handling greift nicht in den Raum zwischen den beiden Formhälften ein.

Soll der Schlitten 112 bzw. das Schlittengehäuse 113 mit dem nicht näher gezeigten Handling in einer über die Scheibe 128 hinausgehenden Endlage festgelegt werden, so erfolgt ein Verschieben bis zu einem Anschlag 154. Damit hier nicht möglicherweise der volle Scheibenteil der Scheibe 128 durch Anschlagen an den Gabelbolzen 130 stört, soll letzterer erfindungsgemäß in das Schlittengehäuse 113 zurückgezogen werden. Hierzu ist auf der Welle 140 eine weitere Scheibe 155, wie in Figur 7 gezeigt, angebracht, die ihrerseits einen exzentrisch angebrachten Bolzen 156 aufweist. Von diesem Bolzen 156 wird mittels eines Kipphebels 158 über einen Drehpunkt 159 eine Verbindung mit einem Bolzen 160 auf dem Gabelbolzen 130 hergestellt. Der Kipphebel 158 weist dabei an beiden Enden Führungsschlitze 161 bzw. 161a auf, in die Bolzen 156 bzw. 160 eingreifen. Der Gabelbolzen 130 ist einem Führungsschacht 162 eingepaßt, so daß er in Gebrauchslage aus dem Schlittengehäuse 113 so weit herausragt, daß in seine Gabelung die Scheiben 127 bzw. 128 eingreifen können.

Wird, wie oben beschrieben, die Welle 140 in Richtung y gedreht, so wird auch die Scheibe 155 in Richtung y gedreht. Diese Drehung bewirkt, daß der exzentrisch gelagerte Bolzen 156 durch sein Eingreifen in den Führungsschlitz 161 die obere Hälfte des Kipphebels 158 um den Drehpunkt 159 in Richtung s bewegt. Dadurch wird zwangsläufig die untere Hälfte des Kipphebels 158 entgegengesetzt der Richtung s in eine Richtung o verschoben. Durch das Eingreifen des Bolzens 160 in den Führungsschlitz 161a wird durch die Bewegung des Kipphebels 158 der Gabelbolzen 130 in den Führungsschacht 162 eingefahren, so daß er ggfs. nicht mehr aus dem Gehäuse 113 herausragt. Ein Eingreifen des Gabelbolzens 130 in die Scheibe 127 bzw. 128 ist in dieser Lage nicht mehr möglich. Der Schlitten 112 kann ungehindert an der Scheibe 128 vorbeifahren. Der Schlitten 112 bzw. das Schlittengehäuse 113 kann bis zum Anschlag 154 verschoben werden.

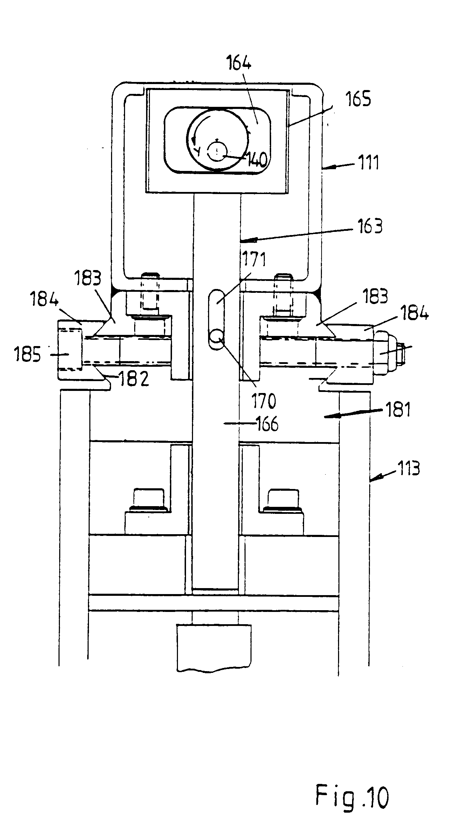

Allerdings ist nun der Schlittenarm 111 mit dem Schlittengehäuse 113 und einem nicht näher gezeigten, am Gehäuse 113 angebrachten Handling frei in beide Richtungen verschiebbar. Das Handling könnte durch eine ungewollte Verschiebung in Richtung der Spritzgießmaschine in den Raum zwischen den beiden Formhälften 102 und 102a gelangen und stören. Zwar wird das Handling durch das Zusammenspiel von Führungsrolle 106 und Leiste 110 in jedem Fall beim Schließen der Spritzgießmaschine aus dem Gießraum gebracht, jedoch ist in vielen Fällen auch ein Festlegen des abgekoppelten Schlittens 112 wünschenswert. Hierzu muß eine andere zusätzliche Sicherung 163 geschaffen werden. Diese Sicherung arbeitet wie folgt:
Wie in Figur 10 dargestellt, ist auf der Welle 140 eine weitere Scheibe 164 aufgebracht. Diese Scheibe 164 ist der Welle 140 exzentrisch zugeordnet und zwar so, daß der wellenfreie Teil der Scheibe 164 in entriegelter bzw. entsicherter Stellung nach oben zeigt. Die Scheibe 164 auf der Welle 140 wird von einem Gehäuse 165 umschlossen. Diesem Gehäuse 165 ist ein Rastbolzen 166 zugeordnet, am entgegengesetzten Ende eine Rastnase 167 aufweist. Der Rastbolzen 166 ist durch einen im Schlittenarm 111 und einem im Gehäuse 113 angelegten Führungsschaft 168 und 169 sowie durch einen Schraubenbolzen 170, der parallel zur Lage der Welle 140 ein Langloch 171 durchdringt, geführt.

Wird die Welle 140 in Richtung y gedreht, drückt die exzentrisch angeordnete Scheibe 164 das Gehäuse 165 und somit den Rastbolzen 166 nach unten bis die Rastnase 167 knapp über der Lauffläche des Führungsarmes 115 zu liegen kommt. Vor dem Anschlag 154 ist im Führungsarm 115 eine Klinke 172 eingebracht. Diese Klinke 172 liegt in einem Klinkenschaft 173 und ist gegen einen unteren Anschlag 174 durch eine Spiralfeder 175 federnd gelagert. Eine Klinkennase 176 ragt aus dem Schaft 173 nach oben aus dem Führungsarm 115 heraus, wobei die Nase zur Anschlagseite des Führungsarmes 115 hin eine senkrechte Schnittkante 177 aufweist, während die entgegengesetzte Seite eine schräge Auflagefläche 178 besitzt. Dieser Klinkennase 176 ist die Rastnase 167 mit einer Auflagefläche angepaßt. Deren senkrechte Schnittfläche weist in Richtung der Spritzgießmaschine, während die schräge Auflagefläche in Richtung der Anschlagseite des Führungsarmes 115 zeigt.

Wird der Schlitten 112 mit dem Schlittengehäuse 113 zum Anschlag 154 hin verschoben, treffen die Rastnase 167 des Rastbolzens 166 und die Klinkennase 176 der Klinke 172 mit ihren schrägen Auflageflächen aufeinander. Da die Klinke 172 federnd gelagert ist, kann sie nach unten weggedrückt werden und die beiden Nasen können übereinander hinweggleiten bis die senkrechten Flächen 177 die Rastnase 167 hintergreifen und die Klinke 172 wieder nach oben springt. In diesem Zeitpunkt hat das Schlittengehäuse 113 den Anschlag 154 erreicht. Der Schlitten 112 und das Schlittengehäuse 113 sind in ihrer äußersten Endlage festgelegt und können nicht mehr in Richtung der Spritzgießmaschine bewegt werden. Ein ungewolltes Verschieben des Handling ist ausgeschlossen.

Zum Ankoppeln der Vorrichtung an die Spritzgießmaschine, was nur bei geschlossenen Formhälften geschehen kann, wird die Welle 140 entgegen der Drehrichtung y gedreht und so die Sicherung 163 durch Anheben des Rastbolzens 166 gelöst. Gleichzeitig wird der Gabelbolzen 130 aus dem Gehäuse 113 ausgefahren und kann seine Aufgabe als Endlagenhalter aufnehmen. Ebenfalls gleichzeitig wird die Leiste 109 abgelassen, so daß wieder eine Führungsrinne 108 für die Führungsrolle 106 gebildet ist.

Wie in Figur 7 und 10 sichtbar, ist zumindest ein Teil des Schlittenarmes 111, der dem Schlittengehäuse 113 aufliegt, mit diesem lösbar verbunden, insbesondere durch Schwalbenschwanzführungen. Dabei weist eine Abdeckung 181 des Schlittengehäuses 113 längs des Führungsarmes 115 an beiden Seiten je eine Keilleiste 182 auf. Entsprechend sind im Bereich des Schlittenarmes 111 an der Unterseite 153 ebenfalls Keilleisten 183 vorgesehen, vorzugsweise angeschweißt, wobei auch andere Befestigungsmöglichkeiten denkbar sind, wie z.B. Verschraubungen od. dgl..

Die Keilleisten 182 und 183 werden durch Klemmstücke 184 mit entsprechender Schwalbenschwanzführung, welche die Keilleisten umgreifen, und Gewindebolzen 185 miteinander verbunden. Hierdurch kann der Schlittenarm 111 in Richtung x gesteuert werden.

## Patentansprüche

1. Vorrichtung zum Entnehmen von Gegenständen aus beispielsweise einem Formraum zwischen zwei Formhälften (1,2 bzw. 102,102a) einer Maschine, insbesondere Spritzgießmaschine, Presse od. dgl., wobei mit einer Formhälfte (2,102a) ein Antriebselement (11,122) verbunden ist, welches ein Antriebsrad (10,104) an der anderen Formhälfte (1,102) antreibt und hierdurch eine Schwinge oder Kurbel (9,105) in Drehbewegung versetzt, über die ein Arm oder Schlitten (5,112) mit der Entnahmeeinrichtung aus dem Formraum führbar ist, indem die Schwinge oder Kurbel (9,105) in einen Kanal (12,108) zwischen zwei Führungsstreifen (13,14;109,110) eingleitet und in jeder vorbestimmten Endlage des Armes oder Schlittens (5,112) aus diesem Kanal (12,108) herausfährt und der Arm oder Schlitten (5,112) in diesen Endlagen gehalten ist,
dadurch gekennzeichnet,
daß an der einen Formhälfte, an welcher der Arm oder Schlitten (5,112) und die Schwinge oder Kurbel (9,105) befestigt ist, auch eine Verriegelungseinheit festliegt, welche die Festlegung des Armes oder Schlittens (5,112) durch formschlüssigen Eingriff zwischen der Verriegelungseinheit und dem Arm oder Schnitten (5,112) bewirkt, wobei die Verriegelungseinheit über ein Getriebe mit einem Antriebselement (27,123) gekoppelt ist, welches mit der anderen Formhälfte verbunden ist, und wobei das Getriebe so abgestimmt ist, daß die Verriegelung erst dann erfolgt, wenn die Schwinge oder Kurbel (9,105) außer Eingriff mit dem Kanal (12,108) gerät.

2. Vorrichtung nach Anspruch 1, dadurch gekennzeichnet, daß die Verriegelungseinheit (20) einen Schieber (21) aufweist, der mit einer Rastnase (22,23) in eine Nut (24) eingreift bzw. einen Riegel (25) hintergreift, wobei die Nut (24) dem Führungsstreifen (14) eingeformt und der Riegel (25) am Arm (5) angeordnet ist.

3. Vorrichtung nach Anspruch 1 oder 2, dadurch gekennzeichnet, daß die Rastnasen (22,23) an dem Schieber (21) entlang der Bewegungsrichtung (y) des Schiebers (21) versetzt angeordnet sind.

4. Vorrichtung nach einem der Ansprüche 1 bis 3, dadurch gekennzeichnet, daß das Antriebselement eine Zahnstange (27) ist, welche ein Zahnrad (28) antreibt.

5. Vorrichtung nach Anspruch 4, dadurch gekennzeichnet, daß das Zahnrad (28) über weitere Zahnräder (30,31) mit einem Exzenterrad (33) verbunden ist, welches mit einem exzentrisch angeordneten Bolzen (34) ein Langloch (35) in einem Schlitten (4) für den Schieber (21) durchsetzt und die Zahnräder (28,30,31) so aufeinander abgestimmt sind, daß das Exzenterrad (33) den Schieber (21) und damit die Rastnasen (22,23) dann in Eingriff mit der Nut (24) bzw. dem Riegel (25) bringt, wenn ein den Arm (5) tragender Schlitten (4) auf einen Anschlag (17 oder 18) auffährt und die Schwinge (9) außer Eingriff mit dem Kanal (12) gerät.

6. Vorrichtung nach wenigstens einem der Ansprüche 1 bis 5, dadurch gekennzeichnet, daß der Arm (5) von einer Stange (40) durchsetzt ist, an welcher drei Exzenter angeordnet sind und welche um ihre Achse drehbar ist, wobei ein vorderer Exzenter (42) über einen Streifen (43) mit dem Führungsstreifen (13) verbunden ist und diesen bei Drehung der Stange (49) anhebt.

7. Vorrichtung nach Anspruch 5 oder 6, dadurch gekennzeichnet, daß eine exzentrisch auf der Stange (40) sitzende Scheibe (46) bei Drehung der Stange (40) über einen Hebelarm den Riegel (25) anhebt.

8. Vorrichtung nach einem der Ansprüche 5 bis 7, dadurch gekennzeichnet, daß mit der Stange (40) ein Riegelbolzen (48) exzentrisch verbunden ist, welcher mit einer festliegenden Klinke (49) zusammenwirkt.

9. Vorrichtung nach Anspruch 1, dadurch gekennzeichnet, daß die Verriegelungseinheit eine stationäre Endlagenfestlegung (127,128) aufweist, welche mit einem Gegenelement (130) am Schlitten (112) zum Festlegen des Schlittens (112) in der Endlage zusammenwirkt, wobei das Gegenelement ein Gabelbolzen (130) mit einer Gabelung ist, und die Endlagenfestlegung aus einer Scheibe (127,128) besteht, welche einen Sektorenausschnitt (129) aufweist, der zwei Steuerkanten (131,132) zum Eindrehen eines vollen Scheibenteils (133) in die Gabelung aufweist.

10. Vorrichtung nach Anspruch 9, dadurch gekennzeichnet, daß zwei Endlagenfestlegungen (127,128) vorgesehen sind, welche in einem Abstand (b) voneinander angeordnet sind.

11. Vorrichtung nach Anspruch 9 oder 10, dadurch gekennzeichnet, daß die Scheiben (127,128) auf einer Welle (126) angeordnet sind, welche über eine Getriebeeinheit (124) in Drehbewegung versetzbar ist.

12. Vorrichtung nach Anspruch 11, dadurch gekennzeichnet, daß die Getriebeeinheit aus zumindest einem Stirnrad (125) besteht,. welches von einer Zahnstange (123) od. dgl. Antriebselement gekämmt ist, die an der anderen Formhälfte festliegt, wobei die Zahnstange (123) parallel zu einer Zahnstange (122) zum Bewegen des Kurbelarmes (105) verläuft.

13. Vorrichtung nach Anspruch 12, dadurch gekennzeichnet, daß die Getriebeeinheit (124) zum Abstimmen des Eingriffs der Scheiben (127,128) in die Gabelung in den jeweiligen Endlagen über Über- bzw. Untersetzungsräder mit der Welle (126) verbunden ist.

14. Vorrichtung nach wenigstens einem der Ansprüche 9 bis 13 mit einer Sicherung für den abgekoppelten Schlitten und einer Einrichtung zum Aufheben der Führungsrinne durch ein Anheben einer Leiste, welche an einer Drehwelle angeordnet sind, dadurch gekennzeichnet, daß an der Drehwelle (140) auch eine Einrichtung zum Verschieben des Gegenelementes (130) vorgesehen ist, wobei die Einrichtung aus einem Kipphebel (158) besteht, welcher um einen gehäusefesten Drehpunkt (159) dreht sowie einends an das Gegenelement (130) und andernends exzentrisch an einer Scheibe (155) auf der Welle (140) angekoppelt ist.

## Claims

1. Device for removing articles from for example a mould chamber between two mould halves (1, 2 or 102, 102a) of a machine, in particular an injection moulding machine, press or the like, wherein connected to one mould half (2, 102a) is a drive element (11, 122) which drives a drive gear (10, 104) on the other mould half (1, 102) and thus sets in rotation a link or crank (9, 105) by which an arm or carriage (5, 112) can be guided with the removal device out of the mould chamber, by sliding the link or crank (9, 105) into a channel (12, 108) between two guide strips (13, 14; 109, 110) and moving it out of this channel (12, 108) in each predetermined end position of the arm or carriage (5, 112) and keeping the arm or carriage (5, 112) in these end positions, characterised in that on one mould half to which the arm or carriage (5, 112) and the link or crank (9, 105) is attached, there is also fixed a locking unit which causes fixing of the arm or carriage (5, 112) by form-locking engagement between the locking unit and the arm or carriage (5, 112), wherein the locking unit is coupled by a gear mechanism to a drive element (27, 123) which is connected to the other mould half, and wherein the gear mechanism is adjusted in such a way that locking takes place only when the link or crank (9, 105) is disengaged from the channel (12, 108).

2. Device according to claim 1, characterised in that the locking unit (20) comprises a slide valve (21) which engages by a latching projection (22, 23) in a groove (24) or engages behind a catch (25), wherein the groove (24) is formed in the guide strip (14) and the catch (25) is arranged on the arm (5).

3. Device according to claim 1 or 2, characterised in that the latching projections (22, 23) are arranged on the slide valve (21), offset in the direction of movement (y) of the slide valve (21).

4. Device according to any of claims 1 to 3, characterised in that the drive element is a rack (27) which drives a gear (28).

5. Device according to claim 4, characterised in that the gear (28) is connected by further gears (30, 31) to a cam gear (33) which with an eccentrically arranged bolt (34) passes through a slot (35) in a carriage (4) for the slide valve (21), and the gears (28, 30, 31) are coordinated with each other in such a way that the cam gear (33) brings the slide valve (21) and hence the latching projections (22, 23) into engagement with the groove (24) or catch (25) when a carriage (4) carrying the arm (5) encounters a stop (17 or 18) and the link (9) is disengaged from the channel (12).

6. Device according to one or more of claims 1 to 5, characterised in that through the arm (5) extends a rod (40) on which are arranged three cams and which is rotatable about its axis, wherein a front cam (42) is connected by a strip (43) to the guide strip (13) and lifts the latter on rotation of the rod (40).

7. Device according to claim 5 or 6, characterised in that a disc (46) mounted eccentrically on the rod (40) on rotation of the rod (40) by means of a lever arm lifts the catch (25).

8. Device according to any of claims 5 to 7, characterised in that a catch bolt (48) which cooperates with a fixed pawl (49) is connected eccentrically to the rod (40).

9. Device according to claim 1, characterised in that the locking unit comprises a stationary end position fixing means (127, 128) which cooperates with a counterelement (130) on the carriage (112) for fixing the carriage (112) in the end position, wherein the counterelement is a forked bolt (130) with a fork, and the end position fixing means consists of a disc (127, 128) comprising a sector cutaway (129) which comprises two control edges (131, 132) for rotating a solid disc portion (133) into the fork.

10. Device according to claim 9, characterised in that two end position fixing means (127, 128) are provided, which are arranged at a distance (b) from each other.

11. Device according to claim 9 or 10, characterised in that the discs (127, 128) are arranged on a shaft (126) which can be set in rotation via a gear unit (124).

12. Device according to claim 11, characterised in that the gear unit consists of at least one spur gear (125) which meshes with a rack (123) or the like drive element which is fixed to the other mould half, wherein the rack (123) runs parallel to a rack (122) for moving the crank arm (105).

13. Device according to claim 12, characterised in that the gear unit (124) for adjusting engagement of the discs (127, 128) in the fork in the respective end positions is connected to the shaft (126) by step-up or step-down gears.

14. Device according to one or more of claims 9 to 13 with a locking means for the uncoupled carriage and a device for raising the guide channel by lifting a bar which is arranged on a rotary shaft, characterised in that a device for displacing the counterelement (130) is also provided on the rotary shaft (140), wherein the device consists of a tilt lever (158) which turns about a pivot point (159) fixed to the housing and also is coupled at one end to the counterelement (130) and at the other end eccentrically to a disc (155) on the shaft (140).

## Revendications

1. Dispositif pour enlever des objets, par exemple, à partir d'un espace de moulage entre deux demi-moules (1, 2 ou 102, 102a) d'une machine, en particulier d'une presse à injection, d'une presse ou autre, dispositif dans lequel un élément de commande (11, 122) est relié à un demi-moule (2, 102a), lequel élément commande une roue d'entraînement (10, 104) de l'autre demi-moule (1, 102), ce qui déclenche un mouvement de rotation d'une bielle oscillante ou manivelle (9, 105), grâce auquel un bras ou chariot (5, 112), associé au dispositif d'enlèvement, peut être guidé à partir de l'espace de moulage, tandis que la bielle oscillante ou manivelle (9, 105) s'engage dans une gouttière (12, 108) entre deux barres de guidage (13, 14; 109, 110) et sort de cette gouttière (12, 108) à chaque fin de course prévu du bras ou chariot (5, 112) et le bras ou chariot (5, 112) est maintenu dans ces positions de fin de course,
caractérisé en ce que
une unité de verrouillage est également fixée sur le demi-moule sur lequel sont fixés le bras ou chariot (5, 112) et la bielle oscillante ou manivelle (9, 105), laquelle unité de verrouillage assure la fixation du bras ou chariot (5, 112) au moyen d'un engrènement par sûreté de forme entre l'unité de verrouillage et le bras ou chariot (5, 112), l'unité de verrouillage, au moyen d'un jeu d'engrenages, étant couplée à un élément de commande (27, 123) qui est relié à l'autre demi-moule, et le jeu d'engrenages étant conçu de façon telle, que le verrouillage ne se produit que si la bielle oscillante ou manivelle (9, 105) sort de la gouttière (12, 108).

2. Dispositif selon la revendication 1, caractérisé en ce que l'unité de verrouillage (20) comporte un coulisseau (21) qui, au moyen d'une came de butée (22, 23), s'engage dans une rainure (24) ou s'engage par l'arrière dans un verrou (25), la rainure (24) étant formée dans la barre de guidage (14) et le verrou (25) étant monté sur le bras (5).

3. Dispositif selon la revendication 1 ou 2, caractérisé en ce que les cames de butée (22, 23) sont disposées, en décalage, sur le coulisseau (21), en suivant le sens de déplacement (y) de ce coulisseau (21).

4. Dispositif selon l'une des revendications 1 à 3, caractérisé en ce que l'élément de commande est une crémaillère (27) qui entraîne une roue dentée (28).

5. Dispositif selon la revendication 4, caractérisé en ce que la roue dentée (28) est reliée par d'autres roues dentées (30, 31) à une roue d'excentrique (33), qui, par un boulon (34) placé excentriquement, traverse un trou oblong (35) pratiqué dans un chariot (4) pour le coulisseau (21) et les roues dentées (28, 30, 31) sont réglées les unes par rapport aux autres de façon telle, que la roue d'excentrique (33) engage le coulisseau (21) et avec lui les cames de butée (22, 23) dans la rainure (24) ou dans le verrou (25), lorsqu'un chariot (4), servant de support au bras (5), avance jusqu'à une butée (17 ou 18) et que la bielle oscillante (9) sort de la gouttière (12).

6. Dispositif selon au moins une des revendications 1 à 5, caractérisé en ce que le bras (5) est traversé par une tige (40) sur laquelle sont montés trois excentriques et cette tige peut tourner autour de son axe, un excentrique avant (42) étant relié au moyen d'une barre (43) à la barre de guidage (13) et soulève celle-ci par rotation de la tige (40).

7. Dispositif selon la revendication 5 ou 6, caractérisé en ce qu'un disque (46) monté excentriquement sur la tige (40), par rotation de la tige (40), soulève le verrou (25) au moyen d'un bras de levier.

8. Dispositif selon une des revendications 5 à 7, caractérisé en ce qu'un pion de verrouillage (48), qui est relié excentriquement à la tige (40), coopère avec un cliquet (49) fixe.

9. Dispositif selon la revendication 1, caractérisé en ce que l'unité de verrouillage présente un dispositif de fins de course (127, 128), laquelle unité coopère avec un contre-élément (130), au niveau du chariot (112), pour fixer le chariot (112) dans la position de fin de course, le contre-élément étant un boulon à fourche (130) présentant une fourche et le dispositif de fins de course se composant d'un disque (127, 128) qui présente une section sectorielle (129) comportant deux bords d'attaque (131, 132) pour engager une partie pleine du disque (133) dans la fourche.

10. Dispositif selon la revendication 9, caractérisé en ce que sont prévus deux dispositifs de fin de course (127, 128) qui sont espacés l'un de l'autre suivant un intervalle (b).

11. Dispositif selon la revendication 9 ou 10, caractérisé en ce que les disques (127, 128) sont montés sur un arbre (126) qui peut être mis en rotation au moyen d'une unité de transmission (124).

12. Dispositif selon la revendication 11, caractérisé en ce que l'unité de transmission se compose au moins d'un pignon droit (125) lequel est entraîné par une crémaillère (123), ou autre élément d'entraînement, qui est fixée au niveau de l'autre demi-moule, la crémaillère (123) étant parallèle à une crémaillère (122) pour mettre en mouvement le bras de manivelle (105).

13. Dispositif selon la revendication 12, caractérisé en ce que l'unité de transmission (124) est reliée à l'arbre (126) au moyen d'engrenages démultiplicateurs ou réducteurs pour régler l'engagement des disques (127, 128), dans la fourche, dans les fins de course respectifs.

14. Dispositif selon au moins une des revendications 9 à 13, comportant une sécurité pour le chariot désaccouplé et un dispositif pour relever la gouttière de guidage en soulevant une barre de guidage, lesquels sont montés sur un arbre de torsion, caractérisé en ce qu'il est prévu également, au niveau de l'arbre de torsion (140), un dispositif de déplacement du contre-élément (130), le dispositif se composant d'un basculeur (158) qui tourne autour d'un point de rotation (159) fixe par son carter et qui est également accouplé, à une extrémité, au contre-élément (130) et, à l'autre extrémité, à un disque (155) monté excentriquement sur l'arbre (140).
